# EUROPÄISCHE PATENTSCHRIFT

(11) **EP 2 576 185 B1**
(45) Veröffentlichungstag und Bekanntmachung des Hinweises auf die Patenterteilung: **28.08.2019**
(21) Anmeldenummer: 11743766.5
(22) Anmeldetag: 11.04.2011
(51) Int. Cl.: B29C 51/26, B65G 17/00, B65G 21/22, B29C 51/18, B29C 51/20, B29C 51/24, B29C 51/42, B29C 55/02, B29C 55/04, B29C 55/08

(54) **THERMOFORMANLAGE AUFWEISENDES TRANSPORTSYSTEM**
THERMOFORMING PLANT COMPRISING A TRANSPORT SYSTEM
INSTALLATION DE THERMOFORMAGE COMPRENANT UN SYSTEME DE TRANSPORT

(30) Priorität: 02.03.2011 DE 102011012882; 07.06.2010 DE 102010022859
(43) Veröffentlichungstag der Anmeldung: 10.04.2013
(73) Patentinhaber: Kiefel GmbH, 83395 Freilassing (DE)
(72) Erfinder: HINTERSEER, Heinz, 83395 Freilassing (DE); WEIBHAUSER, Martin, 83367 Schönram (DE); KNOLL, Peter, 83404 Ainring (DE)
(74) Vertreter: Farago-Schauer, Peter Andreas
(86) Internationale Anmeldenummer: PCT/DE2011/000380
(87) Internationale Veröffentlichungsnummer: WO 2011/153976

(56) Entgegenhaltungen:
- DE-A1- 2 062 506
- DE-A1- 2 335 246
- DE-A1- 2 335 246
- DE-A1- 19 629 196
- DE-U1- 29 816 386
- DE-U1- 29 910 064
- FR-A- 452 978
- US-A- 3 321 561
- US-A- 3 611 481
- US-A- 4 428 723
- US-A- 4 954 066

## Beschreibung

Die Erfindung betrifft eine Thermoformanlage.

Thermoformanlagen sind vielfältig bekannt. Eine solche Anlage besteht aus mehreren Stationen. Ein Transportsystem mit einer Kette greift eine zu bearbeitende Kunststofflage eingangs der Anlage. Oft handelt es sich hierbei um eine Endlosfolie oder um einen Endlosfolienschlauch, welche von einer Rolle gezogen werden. Das Transportsystem transportiert die zu bearbeitende Kunststofflage durch die üblicherweise linear seriell angeordneten Stationen der Anlage. Auf dem Weg wird die Kunststofflage erwärmt und gelangt im erwärmten Zustand in die eigentliche Thermoformstation. Dort wird sie geformt, dabei je nach Wunsch ausgestanzt oder anderweitig getrennt und ausgangs der Anlage übergeben.

Da die Kunststofflage thermischen Schwankungen unterworfen wird, ändern sich ihre Festigkeit und ihre Maße. Der Halter für die Kunststofflage, meist eine Kette mit Nadeln oder Kluppen, versuchen üblicherweise die Materialbahn unter einer leichten Vorspannung quer gespannt zu halten, also in einer Richtung im Wesentlichen senkrecht zur Maschinenrichtung und innerhalb der Ebene der Kunststofflage.

Die hierbei auf das Transportsystem ausgeübten Querkräfte beeinträchtigen die Lebensdauer des Transportsystems. Üblicherweise werden daher Stützrollen zum Aufnehmen der Querkraft zusätzlich zu der eigentlichen Kette vorgesehen. Die Stützrollen müssen nicht an jedem Kettenglied angeordnet sein. Meist finden sie sich nur in regelmäßigen Abständen vereinzelt an einer umlaufenden Transportkette wieder.

DE 23 35 246 offenbart Maschinen zur Verarbeitung von Kunststoff- und ähnlichen Folien und den Vorschub der Folien z.B. von einer Bearbeitungsstellung zur anderen. Der Vorschub wird durch je einen Kettenantrieb zu jeder Seite der Folienbahn vorgenommen, die Ketten nehmen die Folie durch Dorne an den beiden Rändern mit. Die Bewegung erfolgt meist intermittierend, damit in den Bearbeitungsstationen ausreichend Zeit z.B. zum Stanzen oder Formen verbleibt.

DE 299 10 064 U1 offenbart eine Thermoformvorrichtung mit einem oberen und einem unteren Spannrahmen für das Spannen des zu verformenden Materials und einer das Material zum Spannrahmen transportierenden Transportvorrichtung, die das Material an beiden in Transportrichtung verlaufenden Rändern erfasst, wobei mindestens derjenige Spannrahmen, dem die Transportvorrichtung zugeordnet ist, in Richtung auf seine Spannfläche verjüngt ist und dass die Transportvorrichtung in ihrer Lage der Kontur der Verjüngung angepasst ist.

DE 298 16 386 U1 offenbart eine Transportvorrichtung für Folien und Platten bei Thermoform-Maschinen umfassend zwei einander gegenüberliegende, die Folien oder Platten an ihren Rändern haltende, umlaufende, mit Nadeln besetzte Förderketten, die jeweils in einem Führungsprofil geführt sind, das bei jedem Kettentrum mit Führungen von oben und unten zwischen die über die Rollen hervorstehenden Laschen der Förderkette eingreift, wobei das Führungsprofil von einem Träger an der Thermoform-Maschine gehalten ist.

DE 196 29 196 A1 offenbart eine Vorrichtung zum Thermoformen von Folien insbesondere zum Kaschieren von Formkörpern mit Kaschierfolien. Dabei wird die Folie mit Nadeln von Transportketten einer Transportvorrichtung in eine Thermoformvorrichtung eingezogen und dort zwischen Spannrahmen eingeklemmt und anschließend mit geeigneten Formwerkzeugen ausgeformt oder auf einen Formkörper aufgeformt. Dabei befindet sich die Transportvorrichtung teilweise zwischen den Längsspannleisten der Spannrahmen. Hierdurch kann die von den Spannleisten begrenzte, bearbeitbare Fläche der Folie vergrößert werden, wodurch der Materialverlust durch Verschnitt erheblich verringert werden kann.

DE 2 062 506 offenbart eine Klemmketten-Transportvorrichtung für Kunststofffolien in Thermoform-Automaten oder dergleichen, bei welcher Laschenketten mit an einer Mehrzahl der Laschen angeordneten Feder-Klemmvorrichtung entlang von Führungen umlaufen und bei welcher die Feder-Klemmvorrichtungen die Ränder der Folienbahnen oder abschnitte in Steuerungsabhängigkeit von Auflaufkurven am Anfang des Transportweges erfassen und am dessen Ende freigeben, wobei die Feder-Klemmvorrichtung jeweils aus einer festen Klemmbacke und einer gegenüber dieser federnd anhebbaren und absenkbaren Klemmbacke besteht.

Der Erfindung liegt die Aufgabe zu Grunde, ein verbessertes Transportsystem und somit eine verbesserte Thermoformanlage zur Verfügung zu stellen.

Diese Aufgabe wird gelöst durch eine Thermoformanlage zum Bearbeiten einer Kunststofflage, mit einer Kette zum Transport der Kunststofflage durch die Thermoformanlage, wobei die Kette ein Haltemittel für die Kunststofflage aufweist, sodass die Kunststofflage im Betrieb der Thermoformanlage über die Haltemittel quer zu einer Kettenverlaufsrichtung eine Querkraft auf die Kette ausüben kann, sowie mit einer Führung für die Kette zum Aufnehmen der Querkraft, wobei die Kette eine Grundstruktur mit einer Vielzahl Rollen zwischen Laschen zur Aufnahme einer Transportrichtungskraft aufweist, wobei die Rollen aufrecht orientiert sind, sodass die Querkraft quer zu ihren Rollenachsen wirkt, wobei die Führung direkt an den Rollen angreift, dadurch gekennzeichnet, dass sich die Kette vertikal auf Schwerkraftstützrollen aufstützt, wobei die Schwerkraftstützrollen separat von den Rollen ausgebildet sind und eine liegende Achse haben.

### Begrifflich sei hierzu Folgendes erläutert:

Die "Thermoformanlage" ist eine beispielhafte Kunststoffverarbeitungsanlage.

Die "Kunststofflage" kann insbesondere aus einer Folienbahn, einer Folienschlauchbahn oder einzelnen Kunststoffplatten bestehen.

Die "Kette" ist im Normalfall mit einer herkömmlichen Grundstruktur aufgebaut, also mit gelenkig miteinander verbundenen Gliedern. zwischen Außenlaschen und Innenlaschen befinden sich Bolzen, auf welchen Hülsen stecken, welche wiederum Rollen tragen.

Das "Haltemittel" sind bei Thermoformanlagen üblicherweise Nadeln oder Kluppen angeordnet. Die Kunststofflage wird in diesen entweder eingenadeln oder klemmend gehalten.

Im Betrieb der Thermoformanlage kann die Kunststofflage "Querkräfte" auf die Kette ausüben. Dies geschieht beispielsweise dann, wenn sich die Kunststofffolie thermisch verschmälert, wenn zwei Kettenschienen zum Strammziehen der Kunststofflage auseinanderlaufen oder schon durch die Schwerkraft der Kunststofflage. Als eine Querkraft sei insbesondere eine Kraft verstanden, welche exakt rechtwinklig zu der Maschinenrichtung exakt horizontal ausgeübt wird. Es fallen aber kleine Abweichungen ebenfalls unter den Begriff der Querkraft: so sind die beiden Kettenschienen am rechten und linken Rand der Kunststofflage oft zum Spreizen der Kunststofflage divergierend angeordnet; die Kettenverlaufsrichtung weicht dann um wenige Grade von einer Parallelität zur Maschinenrichtung ab. Auch verhält sich die Kunststofflage mitunter nicht exakt homogen, sodass inhomogene Kräfte auftreten können. Schließlich bewirkt schon ein leichtes Durchhängen der Folie, dass die Querkraft nicht tatsächlich horizontal auf die beiden seitlich angeordneten und meist in exakt gleicher Höhe befindlichen Kettenschienen ausgeübt wird, sondern mit einem leichten Winkel nach unten. Die Querkraft sei also so zu verstehen, dass sie jedenfalls im Wesentlichen, also mit einer Abweichung von unter 20° oder besser unter 10°, senkrecht auf der Maschinenrichtung und der Kettenverlaufsrichtung seitlich steht sowie im Wesentlichen horizontal angreift, also mit weniger als 20° oder 10° Abweichung von der Horizontalen.

In der Regel ist an jedem Ort entlang des Transportwegs ein Kettenschienenpaar in der Anlage vorhanden.

Die "Führung" steht anlagenseitig bzw. transportsystemseitig für die Kette zur Verfügung. Sie verhindert ein übermäßiges Ausweichen der Kette in eine seitliche Richtung unter Einwirkung der Querkraft. Üblicherweise ist die Führung durch eine Kettenschiene gegeben.

Hierbei sind die Rollen "aufrecht" orientiert, wobei hinsichtlich dieser Ausrichtung eine exakt vertikale Ausrichtung nur eine spezielle Ausprägung der Erfindung ist. Auch eine von der exakten Vertikalrichtung abweichende Richtung, vor allem weniger als 20° oder 10° Abweichung zur Vertikalen, sei unter einer aufrechten Orientierung der Rolle zu verstehen.

In anderen hier nicht beanspruchten Ausführungsformen müssen nicht alle Rollen aufrecht angeordnet sein. Vielmehr ist auch denkbar, dass die Kette in ihrem Weg flachgelegt und später wiederaufgerichtet wird, wenn dies gewünscht ist. Das einfachste ist aber voraussichtlich, dass alle Rollen aufrecht orientiert sind, vor allem alle praktisch vertikal.

Durch die vorgeschlagene Rollenorientierung wirkt die Querkraft zwar auf die Kette ein. Die Kette kann diese Querkraft aber rollend abtragen. Insbesondere kommt es nicht zu Verkantungen der Kettenglieder gegeneinander, sondern die im Wesentlichen senkrecht zur Rollenachse angreifende Kraft führt lediglich dazu, dass sich die Kettenglieder gegeneinander um die vorgesehene Schwenkachse verschwenken können.

Dies schont die Kette, und es führt zu einer verlässlicheren Anlage.

Bei der Thermoformanlage zum Bearbeiten einer Kunststofflage, mit einer Kette zum Transport der Kunststofflage durch die Thermoformanlage, wobei die Kette ein Haltemittel für die Kunststofflage aufweist, sodass die Kunststofflage im Bereich der Thermoformanlage über das Haltemittel quer zu einer Kettenverlaufsrichtung einer Querkraft auf die Kette ausüben kann, sowie mit einer Führung für die Kette zum Aufnehmen der Querkraft, wobei die Kette eine Grundstruktur mit einer Vielzahl Rollen zwischen Laschen zur Aufnahme einer Transportrichtungskraft aufweist, greift die Führung direkt an die Rollen an.

Dadurch, dass die Führung zur Aufnahme der Querkraft direkt an den Rollen angreift, kann die Kette einfach konstruiert werden, was sie kostengünstiger macht.

Bevorzugt ist die Kette frei von Querkraftstützrollen. Bei vorbekannten Ketten gab es diese Querkraftstütztrollen, welche sich an einer von den Rollen entfernten Leiste abgestützt haben, um die Querkraft aufzunehmen. Bei solchen Ketten kam es zu einer Aufgabenteilung: der Antrieb der Kette griff in die Grundstruktur der Kette ein, also an die dortigen Rollen. Demgegenüber waren die Querkraftstützrollen vorgesehen, um die Querkräfte aus der Kunststoffbahn aufzunehmen.

Die hier vorgeschlagene Ausführungsform kombiniert Vortrieb und Querkraftresistenz beide an den Rollen der Grundstruktur. Die Querkraftstützrollen können daher entfallen.

Die Kette könnte sich vertikal mit ihren Außenlaschen oder hieran angebrachten Gleitern auf einer Gleitfläche aufstützen. Bei einer solchen Konstruktion ist es nicht notwendig, weitere Maßnahmen für die Aufnahme der Gewichtskraft der Kette oder für vertikal auf die Kette einwirkende Kraftkomponenten vorzusehen.

Gemäß der Erfindung stützt sich die Kette vertikal auf Schwerkraftstützrollen auf.

Eine bevorzugte Ausführungsform der Kette sieht vor, dass Rollen gegenüber der Führung eine unter Querkraft vertikal selbstzentrierende Kontur aufweisen, wobei die Führung eine seitliche Komplementärkontur bereitstellt.

Hiervon unabhängig können Rollen gegenüber der Führung eine unter Schwerkraft horizontal selbstzentrierende Kontur aufweisen, wobei die Führung eine untere Komplementärkontur bereitstellt.

Hierbei sei insbesondere an sphärische, frustrosphärische oder anders konvexe oder an konkave Konturen gedacht.

Beispielsweise lässt sich leicht vorstellen, dass die Rolle, welche auf der Kettenhülse sitzt, nicht glatt zylindrisch ist, sondern eine Bombierung aufweist. Auch polygonale Querschnitte der Rolle sind leicht vorstellbar, wie beispielsweise eine schrägstehende viereckige oder eine sechseckige Kontur.

Die Führung, also insbesondere eine Kettenschiene, kann unabhängig voneinander seitlich oder unten, bevorzugt seitlich und unten, eine Komplementärform für die selbstzentrierende Rollenkontur bereitstellen. Im Beispiel einer sphärischen Außenkontur der Kettenrollen lässt sich also vorstellen, dass das Kettenschienenprofil eine sphärische konkave Schale rund um die Rollen herum innerhalb der Laschen bereitstellt. Bei einer Auslenkung infolge Querkraft läuft die sphärische, zur Kunststofflage hin orientierte Oberfläche der einzelnen Rolle dann in die konkave Schale der seitlich daneben angeordneten Kettenschiene hinein, sodass sich die Rolle vertikal zentriert, und zwar auf die mittlere Höhe ihrer eigenen Kugelstruktur und gleichzeitig auf die mittlere Höhe der seitlichen schalenförmigen Aufnahme.

Bei reiner Schwerkraft, die auf die Kette wirkt, abgesehen von längsgerichteter Zugkraft in der Kette, fällt die kugelige Form gewissermaßen in die schalenförmige Konkavität der Kettenschiene hinein und zentriert sich horizontal Mitte gegen Mitte.

In einer Ausführungsform der Thermoformanlage zum Bearbeiten einer Kunststofflage, mit einer Kette zum Transport der Kunststofflage durch die Thermoformanlage, wobei die Kette ein Haltemittel für die Kunststofflage aufweist, sodass die Kunststofflage im Betrieb der Thermoformanlage über das Haltemittel quer zu einer Kettenverlaufsrichtung eine Querkraft auf die Kette ausüben kann, sowie mit einer Führung für die Kette zum Aufnehmen der Querkraft, läuft die Kette in einem Kettenschienenprofil um und weist eine Grundstruktur mit einer Vielzahl Rollen zwischen Laschen zur Aufnahme einer Transportrichtungskraft auf, wobei das Kettenschienenprofil einen spiegelsymmetrischen Querschnitt mit einer aufrecht orientierten Symmetrieachse aufweist.

Zur begrifflichen Erläuterung sei für die meisten Merkmale der Erfindung auf die vorstehenden Erläuterungen verwiesen.

Die Kette läuft in einer Kettenschiene um. In einer bevorzugten Ausführungsform bedeutet dies, dass die Kette sowohl auf ihrem Hinweg als auch auf ihrem Rückweg im selben Kettenschienenprofil umläuft. Es ist aber auch möglich, dass die Kette nur in eine Richtung in einem Profil verläuft und für den Rückweg in einem separaten Profil oder frei verläuft. Dieses Merkmal ist dann verwirklicht, wenn entweder eines der dann mehreren Kettenschienenprofilen spiegelsymmetrisch mit aufrechtstehender Symmetrieachse, oder wenn die dann mehreren Kettenschienen auf einer Seite der Kunststofflage zusammen dieses Merkmal erfüllen.

Bevorzugt ergibt sich für die im Kettenschienenprofil angeordnete Kette insgesamt eine Spiegelsymmetrie mit aufrechtstehender Symmetrieachse.

Unter einer "aufrecht" orientierten Symmetrieachse sei insbesondere eine vertikal stehende Symmetrieachse verstanden, welche über den Verlauf des Kettenschienenprofils, welches in der Regel linear ist, bevorzugt überall aufrecht ist, also eine Symmetrieebene ergibt. Es ist keine exakt vertikale Ausrichtung notwendig. Zunächst sei darauf hingewiesen, dass bereits eine ingenieurmäßige Abweichung von der Vertikalen im Ergebnis für die Kettenschiene noch quasi vertikal ist. Außerdem kann ohne Weiteres mit einer Winkelabweichung von beispielsweise maximal 10 oder 20° gegenüber der Vertikalen das Merkmal verwirklicht sein.

Ein symmetrisches Kettenschienenprofil, insbesondere bei einer Spiegelsymmetrie mit Einbeziehung der umlaufenden Kette, weist bevorzugt eine Kühlbohrung in der Symmetrieachse auf. Ein hierdurch gepumptes Kühlfluid kann das Profil und die Kette dann in symmetrischer Weise abkühlen. Dies erhöht die Präzision der Bearbeitung.

Es versteht sich, dass auch mehrere Kühlbohrungen in der Symmetrieachse angeordnet sein können. Auch versteht sich, dass Kühlbohrungen zusätzlich zur Symmetrieachse im Profil vorgesehen sein können.

Bei einer Thermoformanlage zum Bearbeiten einer Kunststofflage, mit einer Kette zum Transport der Kunststofflage der Thermoformanlage, wobei die Kette ein Haltemittel für die Kunststofflage aufweist, sodass die Kunststofflage im Betrieb der Thermoformanlage über das Haltemittel quer zu einer Kettenverlaufsrichtung eine Querkraft auf die Kette ausüben kann, sowie mit einer Führung für die Kette zum Aufnehmen der Querkraft, läuft die Kette in einem Kettenschienenprofil und weist eine Grundstruktur mit einer Vielzahl Rollen zwischen Laschen zur Aufnahme einer Transportrichtungskraft auf, wobei ein Heizkörper zum Aufheizen der Kunststofflage vorgesehen ist und wobei das Kettenschienenprofil an ihrer Seite zum Haltemittel hin eine Abschrägung aufweist.

Der "Heizkörper" ist meist ein flächiger Heizkörper. Solche Heizkörper können sich bei Thermoformanlagen sowohl oberhalb als auch unterhalb des Transportwegs für die Kunststoffbahn befinden. Meist ist jedenfalls ein Heizkörper oberhalb der Kunststofflage angeordnet. Dieser strahlt nach unten, sodass die mittels der Transportketten transportierte Kunststofflage vor der Formstation erwärmt und somit aufgeweicht wird.

Um möglichst viel Kunststoff in einer vorgegebenen Anlagenbreite transportieren zu können, sind die Haltemittel für die Kunststofflage möglichst nah an der eigentlichen Grundstruktur der Kette angeordnet. So sind sehr oft kurze gekrümmte Nadeln von den Kettengliedern ausgehend. Diese stehen seitlich von der Kettenlängsrichtung hervor. Dort wird die Kunststofflage an den Seiten eingenadelt.

Bei herkömmlichen Kettenschienenprofilen wird somit ein Randbereich der Kunststofflage nicht vom Heizkörper erfasst. Vielmehr ist dort für den direkten Wärmestrahlzugang das Kettenschienenprofil im Weg. Andersherum besteht die Gefahr, dass sich das Kettenschienenprofil zu sehr erwärmt und gegebenenfalls verformt, wenn die Heizstrahler das Kettenschienenprofil zu sehr erfassen.

Das Kettenschienenprofil hat bei einer horizontal angeordneten Kunststofflage eine Seite, welche zur gehaltenen Kunststofflage orientiert ist, eine Unterseite, eine Oberseite und eine abgewandte Seite. Die der Kunststofflage zugewandte Seite weist die Abschrägung auf, springt also im Verlauf nach oben zurück, also entfernt sich von einer Vertikalen oberhalb des Haltemittels immer weiter. In einer einfachen Ausführungsform ist die der Kunststofflage zugewandte Seite vollständig abgeschrägt.

Die Abschrägung setzt sich bevorzugt bis in die Oberseite des Kettenschienenprofils hinein fort. So ist beispielsweise dann denkbar, dass das Kettenschienenprofil eine im Wesentlichen dreieckige Querschnittsform aufweist, wobei bei einem symmetrischen Aufbau an der Oberseite eine Spitze des Dreiecks angeordnet ist, sodass die Oberseite von dieser Kante aus schräg hinunter bis zum Haltemittel verläuft.

Die vorstehenden Aspekte und vorteilhaften Merkmale der Erfindung sind auch in beliebiger Aggregation vorteilhaft.

Unmittelbar vorteilhaft ist außerdem ein Transportsystem mit einer Kette zum Einsatz in einer Thermoformanlage wie vorstehend beschrieben.

Die Vorteile einer solchen Thermoformanlage und/oder eines solchen Transportsystems erstrecken sich unmittelbar auf ein hiermit hergestelltes Thermoformprodukt.

Es sei ausdrücklich darauf hingewiesen, dass zum Zwecke der besseren Lesbarkeit "mindestens"-Ausdrücke nach Möglichkeit vermieden wurden. Vielmehr ist ein unbestimmter Artikel ("ein", "zwei" etc.) im Normalfall als "mindestens ein, zwei, etc." zu verstehen, sofern sich nicht aus dem Kontext ergibt, dass dort "genau" die angegebene Anzahl gemeint ist.

Die Erfindung wird nachstehend anhand von Ausführungsbeispielen unter Bezugnahme auf die Zeichnung näher erläutert. Dort zeigen
- Figur 1: schematisch in einem Querschnitt ein hier nicht beanspruchtes Kettenschienenprofil mit einem Vorlaufraum, einem Rücklaufraum und einer darin angeordneten Nadelkette,
- Figur 2: vereinfacht schematisch in einem Querschnitt ein zweites Ausführungsbeispiel einer Kettenschiene mit einem zweiten Ausführungsbeispiel einer Kette,
- Figur 3: schematisch in der aus Figur 2 gewählten Schnittansicht vier Rollkörper mit selbstzentrierenden Eigenschaften für eine Kette,
- Figur 4: schematisch in einem Querschnitt ein Kettenschienenprofil mit Zugrollen mit verdoppelter Auflagelänge und Stützrollen zur Gewichtsentlastung an etwa jedem fünften bis zehnten Glied,
- Figur 5: schematisch in einem Querschnitt analog zur Figur 4 eine abgewandelte Ausführungsform,
- Figur 6: schematisch in einem Querschnitt analog zur Figuren 4 und 5 eine weiter abgewandelte Ausführungsform mit Krafteingriff in Rollenmitte,
- Figur 7: schematisch in einem Querschnitt mit verkürzter Folienebene ein Kettenschienenpaar mit zwei Antriebskörpern,
- Figur 8: schematisch in einem Querschnitt analog zur Figur 7 ein Kettenschienenpaar mit einer abgewandelten Konstruktionsweise sowie
- Figur 9: schematisch in einem Querschnitt analog zu den Figuren 7 und 8 ein Kettenschienenpaar in gleicher Bauweise, mit einem Antriebskörper.

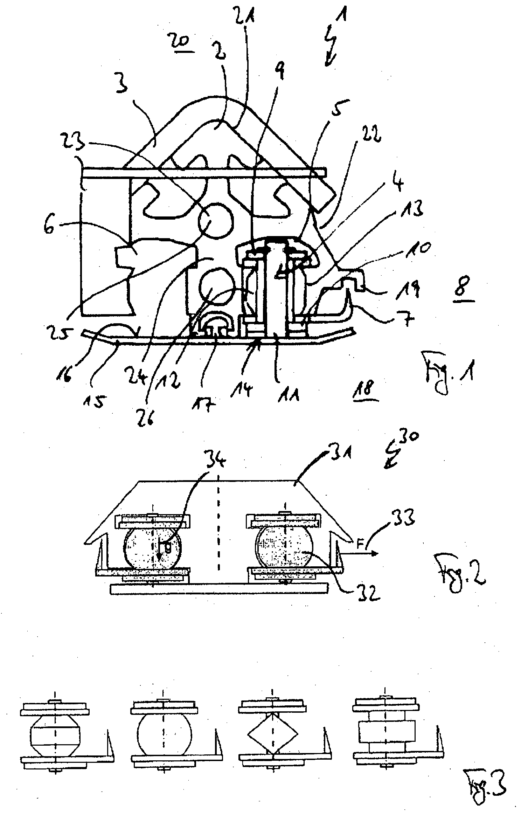

Eine hier nicht beanspruchte Transporteinrichtung 1 in Figur 1 besteht im Wesentlichen aus einem Kettenschienenprofil 2, einer darauf liegenden Leiste 3 sowie einer Kette 4, welche in einem Vorlaufraum 5 hin- und in einem Rücklaufraum 6 (dort ist die Kette 4 nicht dargestellt) zurückläuft.

Die Transporteinrichtung 1 befindet sich in einer Thermoformanlage. Dort werden mit intermittierendem Transport Thermoformprodukte aus einer Endlosfolienbahn geformt und mit einem Stanzwerkzeug vereinzelt.

In der Thermoformanlage befindet sich mindestes eine weitere Transporteinrichtung, welche exakt wie die Transporteinrichtung 1 ausgeführt ist, aber spiegelverkehrt. Nadeln 7 der Kette 4 in der gezeigten Transporteinrichtung 1 sowie gegenüberliegenden Nadeln der dortigen Transporteinrichtung greifen also aufeinander zu, sodass in einem Transportraum 8 die Endlosfolienbahn transportiert werden kann, indem die Kette 4 angetrieben wird oder beide Ketten angetrieben werden.

Die Kette 4 ist in herkömmlicher Weise aufgebaut. Zwischen Außenlaschen 9 (exemplarisch gekennzeichnet) und Innenlaschen 10 (exemplarisch gekennzeichnet) sind Bolzen 11 mit Hülsen (nicht dargestellt) und jeweils einer Rolle 12 angeordnet. Der Vorlaufraum 5 weist an der zum Transportraum 8 hin gerichteten Seite der Rolle 12 eine schienenförmige Gegenkontur 13 passend zur Kontur der Rolle 12 auf.

Der Bolzen 11 sitzt nicht vertikal zentriert in den Laschen, sondern leicht nach oben versetzt, sodass sich eine glatte Stirn 14 nach unten hin ergibt. Dort befindet sich ein Streifen 15 mit einer Gleitfläche 16. Der Streifen 15 ist mit regelmäßig beabstandeten Rastnasen 17 in einem Aufnahmeraum an einer Unterseite 18 des Kettenschienenprofils 2 befestigt.

Zum Transportraum 8 hin befindet sich seitlich der Gegenkontur 13 auf etwa gleicher Höhe eine Sicherungsrille 19, in welcher Spitzen der Nadeln 7 laufen.

An einer Oberseite 20 des Kettenschienenprofils 2 liegt die abgerundet rechtwinklig gebogene Leiste 3 auf dem gesamten Kettenschienenprofil 2. Eine Auflagefläche 21 am Kettenschienenprofil 2 für die Leiste 3 ist stark abgeschrägt, nämlich in einem Winkel von etwa 45° zur Horizontalen. Ebenfalls schräg setzt sich von deren Ende aus eine Seite 22 des Kettenschienenprofils 2 fort, sodass die Sicherungsrille 19 des Kettenschienenprofils 2 deutlich der am weitesten zum Transportraum 8 vorstehende Teil der Transporteinrichtung 1 ist, gemeinsam mit den Nadeln 7.

An einem Kreuzungspunkt 23 des im Wesentlichen kreuzförmigen Kettenschienenprofils 2 sowie in einem vertikalen Steg darunter befinden sich zwei Kühlbohrungen 25, 26.

Im Betrieb der Thermoformanlage läuft die Kette 4 mit eingenadelter Endlosfolienbahn durch den Vorlaufraum 5. Am Ende der Transporteinrichtung befindet sich eine Wendestelle. Von dort aus läuft die Kette 4 zurück durch den Rücklaufraum 6 zu einer zweiten Wendestelle und von aus wieder hinein in den Vorlaufraum 5.

Weil die Endlosfolienbahn im Transportraum 8 in horizontaler Richtung gespannt ist, übt die Endlosfolienbahn über die Nadeln 7 eine Querkraft auf die Kette 4 aus.

Durch die spezielle Anordnung der Kette 4 kann diese die durch den Verarbeitungsprozess entstehenden Kräfte, die in der Endlosfolienbahn bei Temperaturveränderung entstehen, sowie die daraus entstehenden Zug- und Druckauslastungskräfte so übertragen, dass die Lauffläche zwischen Rolle 12 und Kettenschienenprofil 2 gleichmäßig und großflächig mit geringstem spezifischen Druck belastet wird. Dadurch bleibt sie möglichst frei von Abrieb.

Die vorbekannten Transportketten in einem Kettenschienenprofil mit vertikalem Umlauf können dadurch vermieden werden. An diesen befanden sich auf einer Seite Stütztrollen, um die durch die Folienspannung entstehenden Schwerkräfte aufzunehmen, und auf der anderen Seite an der Kette die Nadeln, um die Folie zu halten. Aus geometrischen und fertigungsbedingten Gründen ließen sich oft Schwierigkeiten im Hinblick auf den Verschleiß feststellen. Durch das Querkraft-induzierte Kippmoment lagen die Stütz- oder Transportrollen nicht immer vollflächig an der Profilwand an.

In der hier vorliegenden Ausführungsform wird im Prinzip das Kettenschienenprofil umgelegt, und zwar um 90°, und die Kette läuft dann horizontal um. Dadurch ergibt sich ein günstigerer Kräfteverlauf auf die Stütz- und Zugrolle. Es ergibt sich eine rein rollende Belastung. Die Kette verspannt nicht.

Zusätzlich ist die Kette 4 in vertikaler Hinsicht selbstzentrierend: in Folge der Querkraft hin zum Transportraum wird die Rolle 12 mit ihrer oktagonalen Außenkontur in die Gegenkontur 13 hineingezogen. Die Außenkontur der Rolle 12 ist konvex, die Innenkontur der Gegenkontur 13 an der Profilschiene hingegen konkav. Auf diese Weise wird gewährleistet, dass die Rolle 13 die Last am Kettenschienenprofil 2 abträgt.

Zusätzlich ist die Gleitfläche 16 am Bodenstreifen 15 vorgesehen. Die Kette 4 gleitet somit in der Vertikalachse auf den Gleitelementen in Folge ihres Eigengewichts auf der Gleitfläche 16. Dies ist insbesondere beim Rücklauf im Rücklaufraum 6 zu beobachten, weil dort keine Querkraft auf die Kette ausgeübt wird, welche die Kette etwa vertikal zentrieren könnte.

In Folge des an Oberseite 20 und Seite 22 schräg ausgebildeten Kettenschienenprofils 2 kann die eingenadelte Folie von Heizkörpern in einem Heizkörperbereich 27 praktisch bis zu ihrem Rand beheizt werden.

Bei der zweiten Ausführungsform einer Transporteinrichtung 30 in Figur 2 sind ein Kettenschienenprofil 31 und eine Kettenrolle 32 sowohl in horizontaler als auch in vertikaler Hinsicht selbstzentrierend aufeinander abgestimmt, sodass sowohl eine Querkraft 33 als auch eine Schwerkraft 34 jeweils zu einer Selbstzentrierung führen, nämlich die Querkraft 33 in vertikaler Hinsicht und die Schwerkraft 34 in horizontaler Hinsicht.

Verschiedene weitere Ausführungsformen für selbstzentrierbare Rollen sind in Figur 3 dargestellt.

### Mit anderen Worten:

Die Erfindung betrifft eine Thermoformanlage zum Bearbeiten einer Kunststofflage, welche für den Verarbeitungsverlauf bei präzis-angepasstem Rhythmus im benötigten Einzug der Rollen- oder Plattenform zur Verfügung stehenden Folienbahn zur Kunststoffverarbeitungsmaschine, der sicheren Weitertransportierbarkeit durch bzw. entlang diverse Verarbeitungsprozesse bis zur Endbearbeitung der Materialbahn und zum Ablegen oder Stapeln des Endprodukts verbessert ist.

Herkömmliche Verfahren und Anlagen passen sich nicht gut an die Erfordernisse moderner Kunststoffe und derer Verarbeitungstechnologien an. Sie unterliegen einem hohen Verschleiß. Dies führt zu kostenintensivem Handling, frühzeitigem Austauschen von Bauteilen und teils schlechthin Endergebnissen des Endproduktes.

Aufgabe des neu vorgestellten Verfahrens mit der neu vorgestellten Vorrichtung ist es, eine Kunststofffolienbahn 41 zu führen. Ein hierzu speziell aufgebautes, profiliertes, druck-, temperatur- und korrosionsbeständiges Leit-Schienenpaar 42 wird hierzu eingesetzt. Dieses arbeitet im Parallelbetrieb und ist in der Lage, ein Rollenkettenpaar 43 aufzunehmen. Das Rollenkettenpaar ist mit einer Anzahl Anhängeelemente 47, beispielsweise in Form von Haken oder Nadeln, ausgestattet.

Das Leit-Schienenpaar 42 führt das Rollenkettenpaar 43 dreiseitig gestützt und reibungslos rollend. Zur Ableitung von entstehender Abwärme ist das Leit-Schienenpaar 42 mit Bohrungen 44 zum Durchleiten von Kühlfluid versehen.

Rollen 45 des Rollenkettenpaares 43 haben eine stehende Arbeitsweise. Für den Fall eines eventuellen Trockenlaufes der Gleitfläche zwischen Rollen 45 und Achsen in Form eines Bolzens wurden letztere mit axialen Durchbohrungen 49 in einer Hülse versehen, wodurch in vertikaler Richtung ein Schmiermittellauf ermöglicht wird, welcher über Seitenöffnung 50 austreten kann.

Die Last des Rollenkettenpaares 43 wird über ein Verbindungselement 51 auf eine im unteren Bereich des Systems befindliche Bolzenkette 46 übertragen. Die Bolzenkette 46 dient als Trag- und Laufelement. Sie ist mit vergrößerten Rollenflächen versehen. Auch ihre Last wird letztendlich vom Leit-Schienenpaar 42 abgetragen.

Zum Vorsehen der axialen Durchbohrung 49 und der Seitenöffnung 50 kann einfach ein voller Bolzen durch einen Rohrbolzen ersetzt werden. Der zentrale Kanal weist bevorzugt eine Filzbefüllung auf. Sodann kann durch die horizontale Schmierkanäle ausreichend Schmierflüssigkeit austreten.

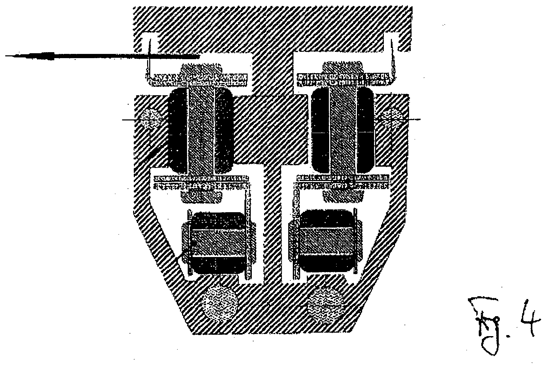

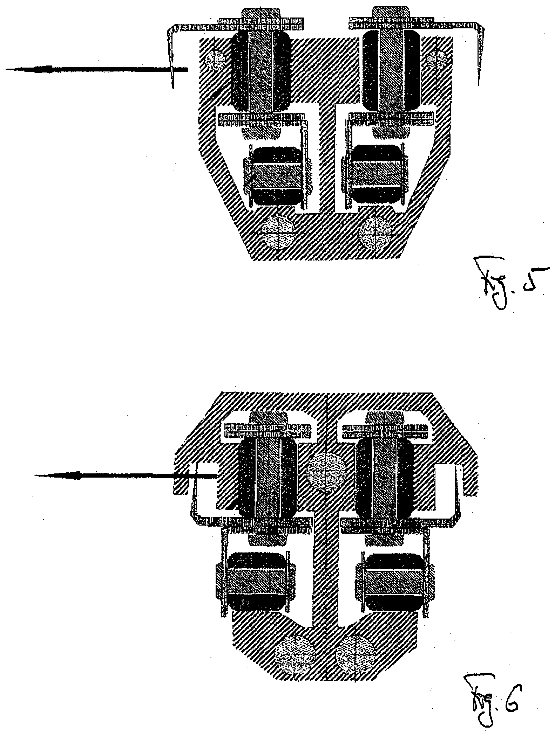

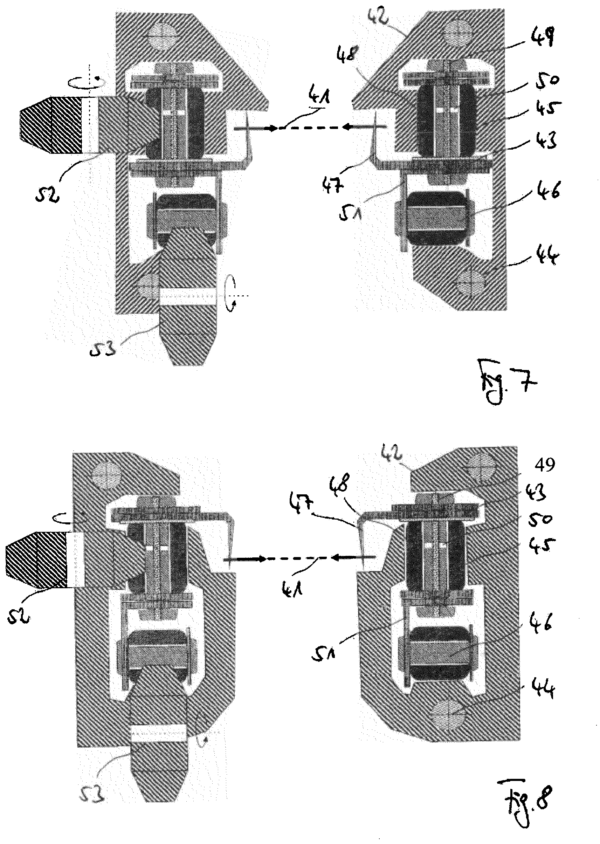

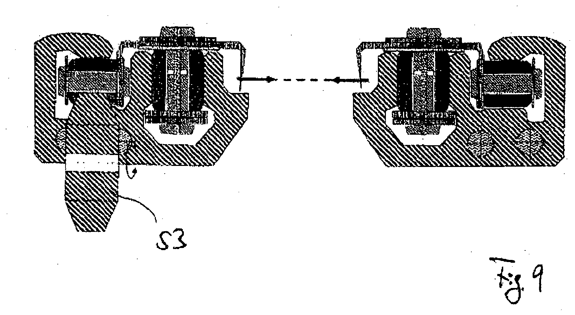

Anwendungsabhängig kann das Transportsystem so ausgelegt werden, dass die Folienbahn von unten (vgl. insbesondere Figuren 4, 6 und 7) oder von oben (vgl. insbesondere Figuren 5, 8 und 9) erfasst, also von den Nadeln durchstochen, wird. Der Antrieb der Ketten wird kopfseitig vorgenommen und kann anlagenbedingt wahlweise über einen waagerechten Ritzeleingriff 52 mit vertikaler Achse ausgelegt sein, oder von bevorzugt unten mit vertikalem Ritzel bei liegender Achse 53.

Die Ausführungsformen in den Figuren 5, 6, 7, 8 und 9 sehen vor, dass die Querkraft aus der Folienebene etwa mittig auf die Rollen der aufrecht angeordneten Kettenglieder wirkt, was nochmals zu einer verlängerten Lebensdauer des Transportsystems führen kann.

Gleiches gilt für den zwischen Zugkettengliedern und Stützrollen gelegten Kraftübertragungspunkt in den Figuren 6, 7 und 9.

## Patentansprüche

1. Thermoformanlage zum Bearbeiten einer Kunststofflage, mit einer Kette (4) zum Transport der Kunststofflage durch die Thermoformanlage, wobei die Kette (4) ein Haltemittel (47) für die Kunststofflage (41) aufweist, sodass die Kunststofflage (41) im Betrieb der Thermoformanlage über das Haltemittel (47) quer zu einer Kettenverlaufsrichtung eine Querkraft (33) auf die Kette (4) ausüben kann, sowie mit einer Führung für die Kette (4) zum Aufnehmen der Querkraft (33), wobei die Kette (4) eine Grundstruktur mit einer Vielzahl Rollen (45) zwischen Laschen zur Aufnahme einer Transportrichtungskraft aufweist, wobei die Rollen (45) aufrecht orientiert sind, sodass die Querkraft (33) quer zu ihren Rollenachsen wirkt, wobei also die Rollen (45) mit einer aufrechten Achse stehend arbeiten, wobei die Führung direkt an den Rollen (45) angreift,
**dadurch gekennzeichnet, dass**
sich die Kette (4) vertikal auf Schwerkraftstützrollen aufstützt und wobei die Schwerkraftstützrollen separat von den Rollen (45) ausgebildet sind und eine liegende Achse haben.

2. Thermoformanlage nach Anspruch 1, **dadurch gekennzeichnet, dass** die Kette (4) in einem Kettenschienenprofil (42) umläuft und eine Grundstruktur mit der Vielzahl der Rollen (45) zwischen Laschen zur Aufnahme einer Transportrichtungskraft aufweist, wobei das Kettenschienenprofil (42) einen spiegelsymmetrischen Querschnitt mit einer aufrecht orientierten Symmetrieachse aufweist.

## Claims

1. Thermoforming plant for processing a plastic sheet, with a chain (4) for transporting the plastic sheet through the thermoforming plant, the chain (4) having a retention means (47) for the plastic sheet (41) so that during operation of the thermoforming plant, the plastic sheet (41) can exert a transverse force (33) on the chain (4) transversely to a chain extension direction; and with a guide for the chain (4) for absorbing the transverse force (33), the chain (4) having a basic structure with a plurality of rollers (45) between lugs for absorbing a transport direction force; the rollers (45) being oriented vertically so that the transverse force (33) acts transversely to their roller axes; i. e. the rollers (45) operating in an upright position with an upright axis, the guide directly engaging the rollers (45),
**characterized in that**
the chain (4) vertically rests on gravity support rollers, where the gravity support rollers are formed separate from the rollers (45) and have a horizontal axis.

2. Thermoforming plant according to Claim 1, **characterized in that** the chain (4) circulates in a chain rail profile (42) and has a basic structure with the plurality of rollers (45) between lugs for absorbing a transport direction force; the chain rail profile (42) having a mirror-symmetrical cross-section with an axis of symmetry having an upright orientation.

## Revendications

1. Installation de thermoformage pour le traitement d'une couche de matière plastique, avec une chaîne (4) permettant de transporter la couche de matière plastique à travers l'installation de thermoformage, dans laquelle la chaîne (4) comporte un moyen de maintien (47) pour la couche de matière plastique (41), de telle façon que la couche de matière plastique (41) peut exercer une force transversale (33) sur la chaîne (4) pendant le fonctionnement de l'installation de thermoformage par le biais du moyen de maintien (47), transversalement par rapport à une direction de parcours de la chaîne et avec un guidage pour la chaîne (4) pour la réception de la force transversale (33), dans laquelle la chaîne (4) comporte une structure de base avec une pluralité de rouleaux (45) entre des pattes pour la réception d'une force de direction de transport, dans laquelle les rouleaux (45) sont orientés verticalement, de telle façon que la force transversale (33) agit transversalement à leurs axes de roue, dans laquelle les rouleaux (45) travaillent donc debout avec un axe vertical, dans laquelle le guidage agit directement sur les rouleaux (45),
**caractérisée en ce que**
la chaîne (4) s'appuie verticalement sur les rouleaux d'appui à force de gravité et dans laquelle les rouleaux d'appui à force de gravité sont formés séparément des rouleaux (45) et présentent un axe couché.

2. Installation de thermoformage selon la revendication 1, **caractérisée en ce que** la chaîne (4) circule dans un profilé de rail de chaîne (42) et présente une structure de base avec la pluralité de rouleaux (45) entre des pattes pour la réception d'une force de direction de transport, dans laquelle le profilé de rail de chaîne (42) présente une section transversale symétrique en miroir avec un axe de symétrie orienté verticalement.
